# EUROPÄISCHE PATENTSCHRIFT

(11) **EP 1 468 202 B1**
(45) Veröffentlichungstag und Bekanntmachung des Hinweises auf die Patenterteilung: **21.12.2005**
(21) Anmeldenummer: 03702418.9
(22) Anmeldetag: 10.01.2003
(51) Int. Cl.: F16D 55/224

(54) **SCHEIBENBREMSE MIT NACHSTELLSYSTEM**
DISC BRAKE WITH ADJUSTING SYSTEM
FREIN A DISQUE AVEC SYSTEME DE RATTRAPAGE DE JEU

(30) Priorität: 14.01.2002 DE 10201221
(43) Veröffentlichungstag der Anmeldung: 20.10.2004
(73) Patentinhaber: KNORR-BREMSE SYSTEME FÜR NUTZFAHRZEUGE GMBH, 80809 München (DE)
(72) Erfinder: BAUMGARTNER, Johann, 85368 Moosburg (DE)
(74) Vertreter: Mattusch, Gundula
(86) Internationale Anmeldenummer: PCT/EP2003/000172
(87) Internationale Veröffentlichungsnummer: WO 2003/058086

(56) Entgegenhaltungen:
- WO-A-99/60285
- DE-A- 3 040 186
- FR-A- 1 480 888
- US-A- 3 534 835
- US-A- 5 582 273

## Beschreibung

Die Erfindung betrifft eine Scheibenbremse nach dem Oberbegriff des Anspruchs 1.

Die Erfindung beschäftigt sich insbesondere mit neuartigen Konstruktionen von Scheibenbremsen, insbesondere für Nutzfahrzeuge, welche pneumatisch und/oder elektromechanisch betätigt werden.

Scheibenbremsen lassen sich nach dem gewählten Prinzip der Krafteinleitung in zwei Grundbauarten einteilen:
1. Krafterzeugung und Verschleißnachstellung beiderseits der Bremsscheibe: z.B. hydraulische Festsattelscheibenbremse mit axial fixierter Bremsscheibe und Krafterzeugung beidseits der Bremsscheibe, sowie
2. Krafterzeugung und Verschleißnachstellung auf einer Seite der Bremsscheibe und Übertragung der Betätigungskraft auf die abgewandte Seite nach dem Reaktionskraftprinzip: z.B. Schiebesattelscheibenbremse, Schwenksattelscheibenbremse, Festsattelscheibenbremse mit verschiebbarer Bremsscheibe.

Druckluftbetätigte Scheibenbremsen für schwere Nutzfahrzeuge mit Felgendurchmessern von 15 Zoll und mehr nutzen üblicherweise das Reaktionskraftprinzip, da aufgrund der beengten Einbauverhältnisse am Fahrzeugrad die Anordnung eines Druckluft-Betätigungszylinders nur auf der zur Fahrzeuginnenseite offenen Seite des Fahrzeugrades möglich ist Derartige Konstruktionen zeigen z.B. die DE 36 10 569 A1, die DE 37 16 202 A1, die EP 0 531 321 A1 (siehe hier insbesondere die Konstruktion der Nachsteller nach Art von Drehantrieben) und die EP 0 688 404 A1.

Schiebesattel oder Schwenksattel-Scheibenbremsen benötigen ein achsfestes Bauteil - i.allg. Bremsträger genannt - welches die Bremsschuhe/Bremsbeläge hält bzw. führt und bei Bremsbetätigung deren Umfangskräfte aufnimmt sowie den koaxial zur Fahrzeugachse verschiebbar gelagerten Bremssattel trägt.

Die Relativbewegung, welche der Bremssattel gegen das achsfeste Bauteil ausführt, läßt sich in den Arbeitshub und den Verschleißhub unterteilen. Diesen Effekt macht sich die Erfindung in überraschender Weise zu Nutze.

Der Arbeitshub wird bei jeder Bremsbetätigung ausgeführt, um das Lüftspiel der Bremse zu überwinden und die bei der Kraftaufbringung entstehenden Elastizitäten von Bremsbelägen und Bremssattel auszugleichen. Er beträgt - je nach Höhe der Betätigungskraft und der Größe des Lüftspiels - üblicherweise < 4 mm.

Der Verschleißhub ist dagegen der Verchleißnachstellweg, den der Sattel über eine große Anzahl von Bremsbetätigungen ausführt, um den Verschleiß an der Reaktionsseite der Bremse auszugleichen. Der Verschleißhub setzt sich aus dem Verschleiß des außen liegenden Bremsbelages und der außen liegenden Bremsscheibenreibfläche zusammen und beträgt üblicherweise bis zu 25 mm.

Bei der Bremsenbauart mit einem Festsattel und einer verschiebbaren Bremsscheibe werden dagegen Arbeitshub und Verschleißhub durch Verschieben der Bremsscheibe erzeugt.

Es gibt auch Festsattel Konstruktionen ohne Schiebescheibe, die dann aber eine Zuspannvorrichtung für jeden der beiden Bremsbeläge aufweisen. Dieses Prinzip wird z.B. bei hydraulischen Bremsen realisiert. Eine entsprechende Bremse in hydraulischer Bavart mit zwei Kolben als Zuspannvorrichtung beidseits der Bremsscheibe und einer Nachstellvorrichtung zeigt z.B. die US 3,534,835.

Die Bauarten mit Schiebe - oder Schwenksattel haben den Nachtel, daß der achsfeste Bremsträger zur Umfangskraftaumahme der Bremsbacken und Halterung und Führung des Bremssattels benötigt wird. Durch dieses Bauteil entstehen zusätzliche Kosten und zusätzliches Gewicht Zudem ist das benötigte Schiebeführungs- bzw. Schwenksystem störungsanfällig.

Bei der Bauart mit verschiebbarer Bremsscheibe besteht dagegen das Problem, die Bremsscheibe auf dem Führungsbereich der Nabe über die ganze Lebensdauer leicht schiebbar zu halten. Eine wirkungsvolle Abdichtung ist aufgrund der beengten Einbauverhältnisse und der harten Umgebungsbeanspruchung kaum realisierbar.

Die Erfindung setzt vor diesem Hintergrund bei der Idee an, die Vorteile der vorstehend beschrieben Bremssattelkonzepte miteinander zu kombinieren, wobei eine leichte Anpassbarkeit der Scheibenbremse an verschiedene Zuspanneinrichtungen gegeben sein soll.

Diese Aufgabe löst die Erfindung durch den Gegenstand des Anspruches 1.

Danach ist der Bremssattel zweiteilig aufgebaut und weist ein zuspannseitiges und ein reaktionsseitiges Bremssattelteil auf, wobei das reaktionsseitige Bremssattelteil derart ausgestaltet ist, dass es die Bremsscheibe rahmenartig in ihrem oberen Umfangsbereich einfasst.

Darüber hinaus weist das Nachstellsystem wenigstens eine oder mehrere der Nachstelleinrichtungen auch auf der reaktionsseitigen Seite der Bremsscheibe auf oder es sind Nachstelleinrichtungen auf jeder Seite der Bremsscheibe vorhanden.

Da auf jeder Seite der Bremsscheibe wenigstens eine oder aber zwei Nachstelleinrichtungen zum separaten Verschieben der Bremsbeläge beidseits der Bremsscheibe vorgesehen ist/sind, kann der vom Bremssattel zu überbrückende Weg bei einer Auslegung des Sattels als Schiebe- oder Schwenksattel deutlich verringert werden.

Bei einer Auslegung als Festsattel kann dagegen der Verschiebeweg der Bremsscheibe auf der Achse deutlich verringert werden.

Das reaktionsseitige Bremssattelteil kann nach Art eines Baukastens mit verschiedenen zuspannseitigen Bremssattelteilen kombiniert werden, die jeweils unterschiedliche Zuspanneinrichtungen aufweisen können, so z.B. eine Zuspanneinrichtung mit einem exzentrisch gelagerten Drehhebel im inneren des Bremssattels oder aber eine Zuspanneinrichtung mit einem oder mehreren Kugelgewindetrieben.

Diese modulartige Bauweise ermöglicht eine optimale Anpassungsfähigkeit der Bremse an unterschiedliche Anwendungen.

Auch zur Anpassung an unterschiedliche Radgrößen ist das Modulsystem nutzbar, dabei wird allerdings das jeweils identische zuspannseitige Sattelteil - das Zuspanngehäuse - mit unterschiedlichen reaktionsseitigen Sattelteilen kombiniert.

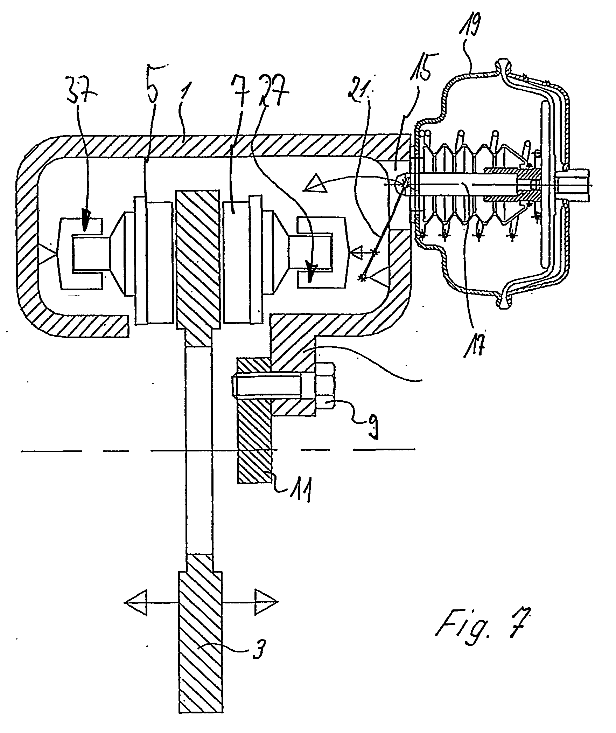

Im Falle einer Zuspanneinrichtung mit einem Gewindespindelsystem nach Art der Fig. 2 bildet das Spindelsystem selbst auch die zuspannseitige Nachstellvorrichtung, wobei die zur Nachstellung erforderliche Drehbewegung jeweils in von S-Nocken-Trommelbremsen an sich bekannter Weise über einen Druckluftbremszylinder und einen als Gestängesteller ausgebildeten Bremshebel oder aber einen elektromotorischen Antrieb erfolgen kann.

Durch die Erfindung wird insbesondere eine Scheibenbremse realisierbar, bei welcher die Erzeugung der Reaktionskraft auf der Zuspannseite abgewandten Seite der Bremse durch
- Verschieben des Bremssattels und/oder
- Verschwenken des Bremssattels und/oder
- Verschieben der Bremsscheibe,
- Verformen von Sattel und/oder Scheibe,
wobei durch die Verschiebe- und/oder Verschwenk- und/oder Verformbewegung im wesentlichen lediglich der Weg des halben oder ganzen Krafthubes überbrückbar ist.

Die Erfindung kombiniert die Vorteile des Festsattelprinzips - wie kompakte Bauweise und Ausführung des Verschleißhubes durch das Betätigungssystem - mit den Vorteilen des Reaktionskraftprinzips.

Alternativ oder ergänzend ist es auch denkbar, daß die Erzeugung der Reaktionskraft auf der Zuspannseite abgewandten Seite der Bremse durch ein elastisches Verformen des Bremssattels und/oder der Bremsscheibe und/oder eines weiteren Elementes erfolgt, wobei durch die Verformung im wesentlichen lediglich der Weg des halben oder ganzen Krafthubes überbrückbar ist. In diesem Fall kann auf Lagerungen der Bremsscheibe oder des Bremssattels in vorteilhafter Weise noch weiter oder sogar ganz verzichtet werden. Elastische Bremsscheiben sind an sich bekannt, so aus der DE 198 10 685 A1.

Durch die weitere(n) Nachstelleinrichtung(en) auf beiden Seiten der Scheibenbremse wird es möglich, die Bremse derart auszugestalten, daß lediglich noch eine Beweglichkeit, vorzugsweise eine Verschiebbarkeit und/oder Verschwenkbarkeit von Sattel und/oder Bremsscheibe gewährleistet sein müssen, die derart bemessen ist, daß der Arbeitshub bei Bremsungen überbrückt werden kann, um die Bremse zuzuspannen. Auf diese Weise lassen sich die Schiebe- und/oder Drehlager und -führungen entsprechend kleiner und preiswerter dimensionieren. Zusätzlich ist gewährleistet, daß eine Leichtgängigkeit über den vollständigen Schiebe- oder Schwenkweg gewährleistet bleibt, da dieser bei quasi jeder Bremsung überbrückt wird.

Vorzugsweise ist die Bremsscheibe als Schiebescheibe ausgebildet ist, welche auf einer Bremsscheibennabe derart verschieblich geführt ist, daß durch das Verschieben maximal ein auf den Krafthub begrenzter Schiebeweg realisierbar ist (der durch die Verschiebe- und/oder Verschwenkbewegung des Bremssattels überbrückbare Weg beträgt je nach Auslegung bei einer Nutzfahrzeugbremse weniger als 4-6 mm oder sogar weniger als 3 mm.

Alternativ oder ergänzend kann der Bremssattel als Schiebesattel ausgebildet sein, der ein Schiebe-Sattellager aufweist, welches direkt am Achsflansch befestigbar ist und welches derart bemessen ist, daß ein auf den Krafthub begrenzter Schiebeweg überbrückbar ist.

Alternativ oder ergänzend kann der Bremssattel als Schwenksattel ausgebildet ist, der ein Schwenk-Sattellager aufweist, welches vorzugsweise direkt am Achsflansch befestigbar ist und mit dem Schwenkwinkel überbrückbar ist, welcher den Bremssattel relativ zur Bremsscheibe im wesentlichen um den Betrag den Krafthubes versetzt.

Die erfindungsgemäße Scheibenbremse ermöglicht es insbesondere, die Krafterzeugungseinrichtung - wie einen druckluft- und/oder elektromotorisch betätigten Bremszylinder oder einen Elektroantrieb - weiterhin nur einseitig an der Bremse anzuordnen.

Im Rahmen der Erfindung werden noch weitere Vorteile erreicht.

Bei einer Variante der Erfindung wird das Problem des gemeinsamen Nachstellens der Nachstell-Drehantriebe auf beiden Seiten der Scheibenbremse gelöst. Hierbei sind die Nachsteller-Drehantriebe beidseits der Bremsscheibe durch eine Synchronisationseinrichtung miteinander gekoppelt. Vorzugsweise ist die Synchronisationseinrichtung als Koppelmechanik oder als elektronisches Kopplungssystem ausgebildet.

Nach einer weiteren Ausführungsform wird die gattungsgemäße Bremse nach Art der Merkmale des Anspruches 16 weitergebildet.

Hier werden eine Ausbildung der Zuspanneinrichtung als Kugelgewindetrieb und ein mikroverschiebbare Sattel- und/oder Scheibenlösung mit einer reaktionsseitigen Nachstellung in baulich kompakter Weise miteinander kombiniert.

Dabei ist der Bremssattel zweiteilig aufgebaut und weist ein zuspannseitiges und ein reakdonsseitiges Bremssattelteil auf, wobei das reaktionsseitige Bremssattelteil die Bremsscheibe rahmenartig in ihrem oberen Umfangsbereich einfasst. Ferner weist das Nachstellsystem zumindest eine Nachstelleinrichtung auf der reaktionsseitigen Seite der Bremsscheibe auf und die Zuspanneinrichtung weist einen oder mehrere Kugelgewindetrieb(e) auf.

Weitere vorteilhafte Ausgestaltungen der Erfindung sind den übrigen Unteransprüchen zu entnehmen.

Nachfolgend werden Ausführungsbeispiele der Erfindung unter Bezug auf die Zeichnung näher erläutert. Es zeigt:
- Fig. 1: einen Schnitt durch eine erste erfindungsgemäße Scheibenbremse;
- Fig. 2: einen Schnitt durch eine zweite erfindungsgemäße Scheibenbremse;
- Fig. 3 - 6: verschiedene Ansichten eines zweiteiligen Bremssattels;
- Fig. 7: eine Schnitt durch eine schematische Darstellung einer weiteren Scheibenbremse.

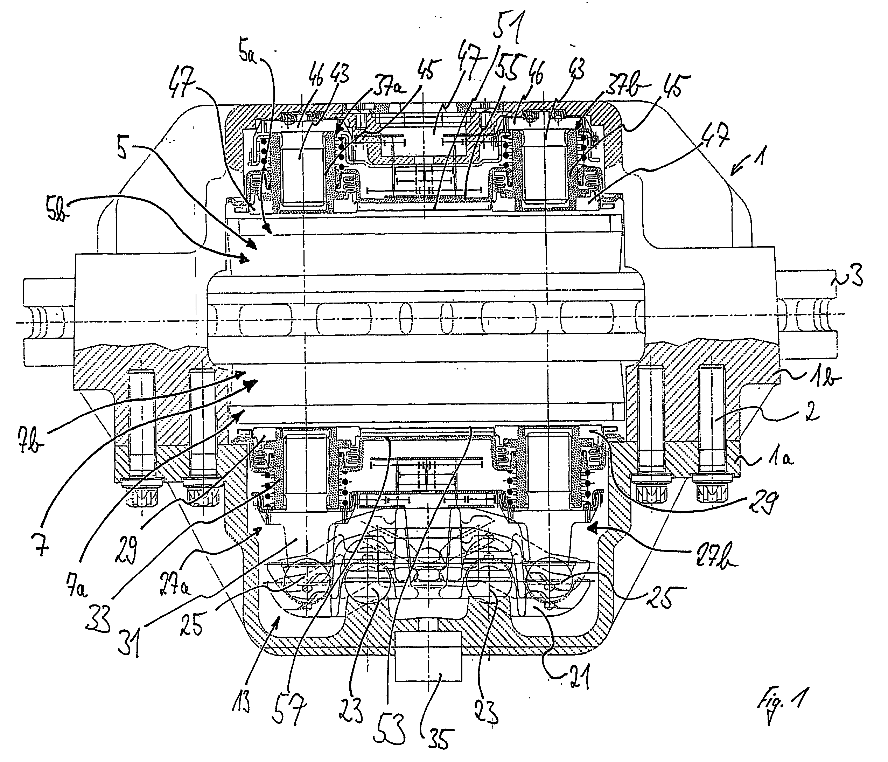

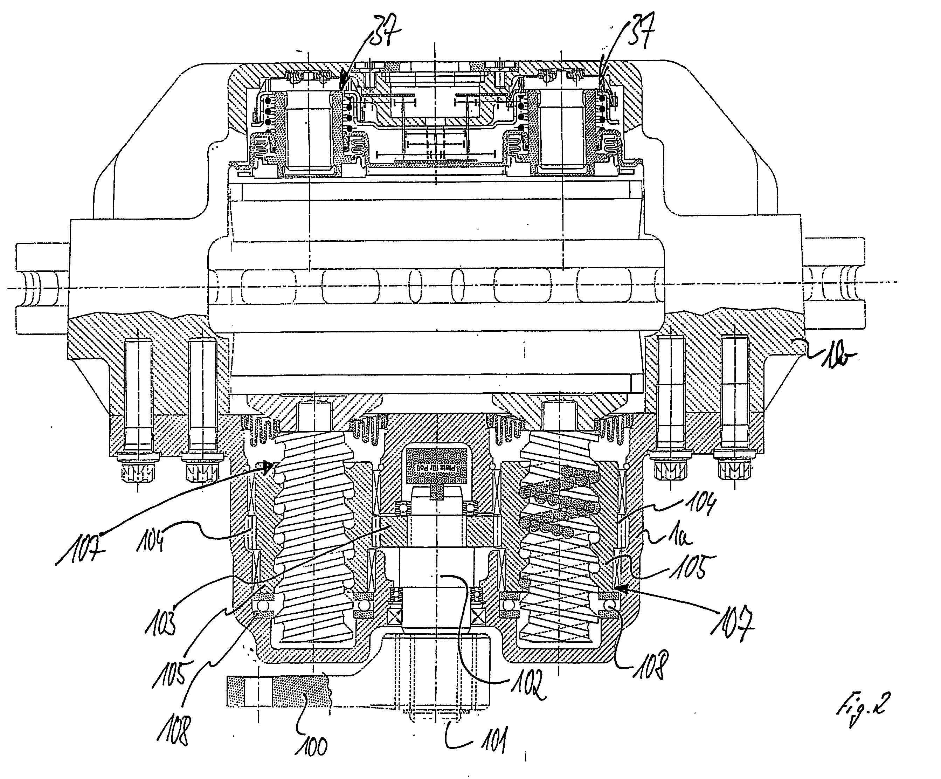

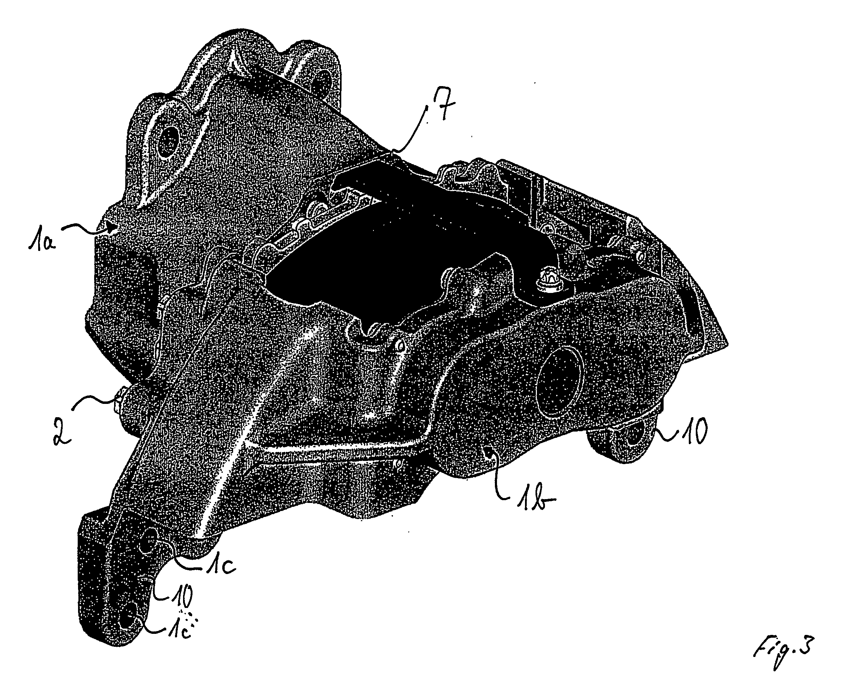

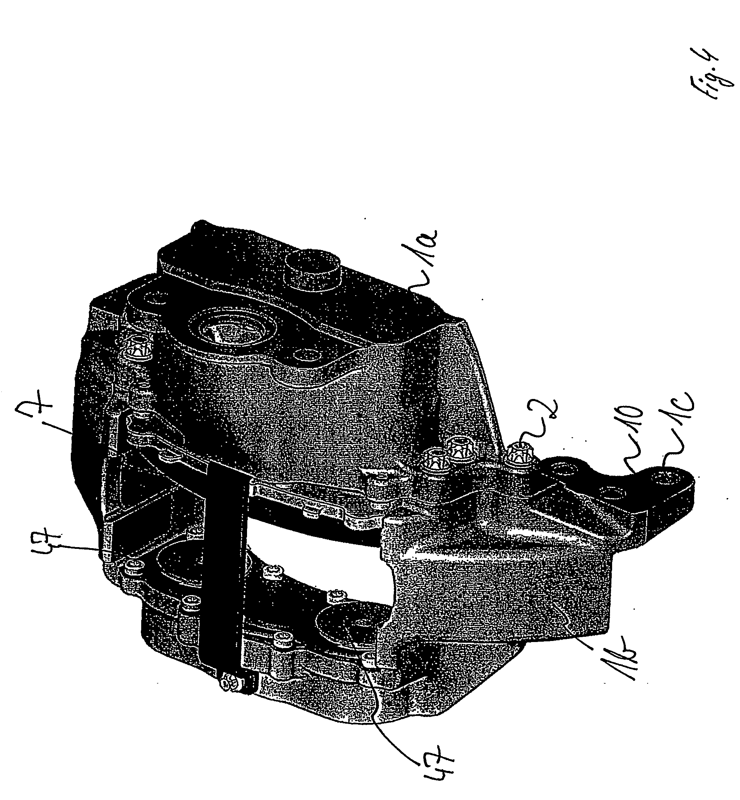

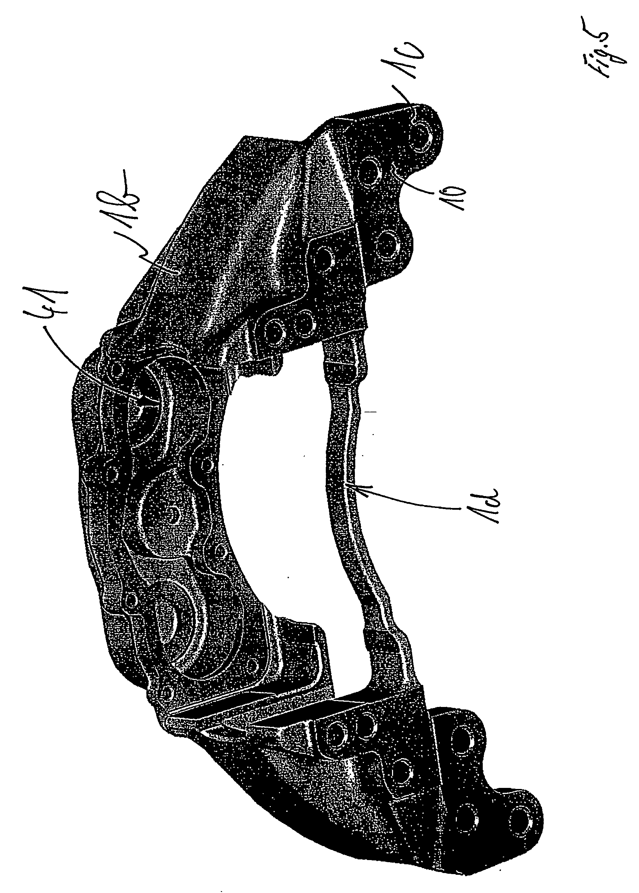

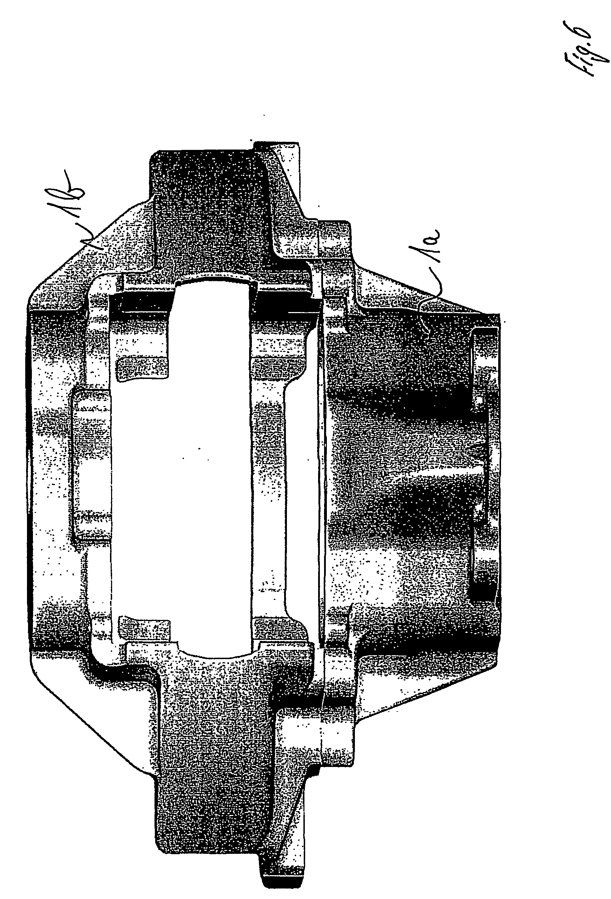

Fig. 1 zeigt einen Schnitt durch eine modulartig aufgebaute Scheibenbremse, die einen zweiteiligen Bremssattel 1 mit Bremssattelteilen 1a, 1b aufweist, welche beispielhaft mittels hier vier dargestellten Bolzen 2 miteinander verschraubt sind.

Der Bremssattel 1 fasst eine Bremsscheibe 3 in ihrem oberen Umfangsbereich ein.

Beidseits der Bremsscheibe 3 sind in Richtung der Bremsscheibe und von dieser weg - d.h., senkrecht zur Ebene der Bremsscheibe 3 - verschiebliche Bremsbeläge 5, 7 angeordnet, die in üblicher Weise aus einem Bremsbelagträger 5a, 7a und dem darauf aufgebrachten Belagmaterial 5b, 7b bestehen.

Die Anlagefläche zwischen den beiden Bremssattelteilen 1a, 1b liegt seitlich zur Ebene der Bremsscheibe 3 versetzt derart, das eines der beiden Bremssattelteile, das in Fig. 1 obere reaktionsseitige Sattelteil 1b, selbst einen Rahmen ausbildet, der die Bremsscheibe 3 in ihrem oberen Umfangsbereich vollständig umfasst, derart, dass auch die Bremsbeläge 5 und 7 auf beiden Seiten der Bremsscheibe von dem reaktionsseitigen Sattelteil 1b schachtartig aufgenommen sind.

Das zuspannseitige Bremssattelteil 1a ist dagegen derart ausgelegt, dass es im wesentlichen die Zuspanneinrichtung 13 aufnimmt, welche der Umsetzung der Bewegung eines vorzugsweise pneumatischen oder aber eines elektromechanischen Antriebes in eine Zuspannbewegung des zuspannseitigen Bremsbelages 7 dient.

Durch diese Ausgestaltung des Bremssattels 1 kann das reaktionsseitige Bremssattelteil 1b als "Gleichteil" modulartig mit verschiedensten Zuspanneinrichtungen kombiniert werden, ohne dass es hinsichtlich seines Aufbaus verändert werden müßte.

Der Bremssattel 1 ist als Festsattel auslegbar, wobei in diesem Fall die Bremsscheibe als auf der Nabe des Fahrzeuges verschiebliche und/oder in sich elastische Scheibe ausgebildet wird. Dies ist prinzipiell in Fig. 7 dargestellt, welche allerdings beispielhaft einen einteiligen Bremssattel 1 zeigt und nur zur Veranschaulichung des Schiebescheibenprinzips dient.

Der Bremssattel 1 bzw. eines der Bremssattelteile, insbesondere das reaktionsseitige Bremssattelteil 1b, kann nach Art der Fig. 3 - 6 in seinem unteren Abschnitt - siehe auch Fig. 7 - an unteren Ansätzen 10 mit Bohrungen 1c wenigstens einem oder mehreren Bolzen 9 entweder direkt an einem Achsflansch 11 der Fahrzeugachse (ansonsten hier nicht abgebildet) oder über einen Zwischenflansch (hier nicht abgebildet) am Achsflansch 11 befestigt sein.

Der Bremssattel 1 ist relativ zum Achsflansch 11 unverschiebbar, es handelt sich damit um einen sogenannten Festsattel. Da der Bremssattel 1 relativ zum Achsflansch 11 unverschiebbar ist, benötigt er neben einer Zuspanneinrichtung 13 auf einer Seite der Bremsscheibe 3 auf beiden Seiten der Bremsscheibe jeweils separate Nachstelleinrichtungen, welche es erlauben, den Bremsbelagverschleiß auszugleichen.

An seiner rechten Seite (siehe zur Veranschaulichung Fig. 7) weist das zuspannseitige Bremssattelteil 1a bzw. der einteilige Sattel 1 der Fig. 7 eine Öffnung 15 für eine (hier nicht dargestellte) Kolbenstange 17 eines Bremszylinders 19 (vorzugsweise pneumatisch) oder einer elektromechanischen Antriebseinrichtung auf.

Die Kolbenstange 17 wirkt auf einen - vorzugsweise exzentrisch - am Bremssattel 1 gelagerten, traversenartigen Drehhebel 21 ein, der in Fig. 1 in mehreren Betriebsstellungen erkennbar ist und der sich über zwei Kugelelemente 23 am Inneren des zuspannseitigen Bremssattelteils 1a abstützt. An seiner vom Bremssattel 1 abgewandten Seite weist er zwei weitere Kugelelemente 25 auf, die seitlich nach außen zu den ersten Kugelelementen 23 versetzt angeordnet sind.

Diese weiteren Kugelelemente 25 wirken auf zwei parallel zueinander angeordnete Spindelanordnungen 27a,b ein, an deren bremsscheibenzugewandten Enden jeweils Druckstücke 29 angeordnet sind, welche auf den Bremsbelag 7 einwirken.

Beim Zuspannen der Bremse wird der Drehhebel 21 verschwenkt, der derart exzentrisch gelagert/ausgebildet ist, dass er beim Verschwenken die Spindelanordnungen 27a, b in Richtung der Bremsscheibe vorschiebt, bis die Bremsbeläge an der Bremsscheibe 3 anliegen.

Die Spindelanordnungen 27a, b sind zur Realisierung der verschleißbedingten Nachstellung in ihrer Länge senkrecht zur Bremsscheibe 3 veränderlich. Dies wird dadurch realisiert, dass sie aus einem Bolzen 31 und einer darauf durch Verschrauben axial verstellbaren Hülse 33 bestehen, wobei hier die Hülsen 31 die Druckstücke 29 tragen. Eine umgekehrte Anordnung ist denkbar.

Angetrieben werden die Hülsen 33a, b oder die Bolzen 31 durch einen Elektromotor 35 an der Bremssattelaußenseite, welcher über eine Antriebsverbindung und hier nicht im einzelnen dargestellte Zahnräder auf die außen verzahnten Hülsen 33a, b oder Bolzen 31 einwirkt.

Zum Rückstellen des Bremsbelages können z.B. eine oder mehrere Rückstellfedern dienen.

Da der Bremssattel 1 relativ zur Fahrzeugachse fix bzw. nicht beweglich angeordnet ist, ist auf der der Zuspanneinrichtung 13 gegenüberliegenden Seite der Bremsscheibe 3 im Bremssattel 1 eine weitere Nachstelleinrichtung vorgesehen, d.h., auch hier sind zwei zueinander parallel und senkrecht zur Bremsscheibe ausgerichtete Spindelanordnungen 37a, b vorgesehen, welche elektromotorisch von einem am/im reaktionsseitigen Teil angeordneten Elektromotor angetrieben werden und wiederum jeweils einen Bolzen 43 und eine darauf durch Verschrauben axial verstellbare Hülse 45 aufweisen, welche die Druckstücke 47 tragen, die auf den zuspannseitigen Bremsbelag 5 einwirkt.

Auch die Spindelanordnungen 37a, b sind zur Realisierung verschleißbedingten Nachstellung in ihrer Länge senkrecht zur Bremsscheibe 3 veränderlich. In ihrem von der Bremsscheibe abgewandten Bereich stützen sie sich jeweils direkt oder über eine Scheibe 46 an der Innenseite des Bremssattelteiles 1b, welches eine Ausnehmung 41 für die Nachstellvorrichtung aufweist.

Alternativ zu Nachstelldreheinrichtungen sind auch lageveränderbare Kolben oder andere lageveränderbare Einrichtungen realisierbar.

Da der Bremssattel nur auf einer Seite der Bremsscheibe 1 eine Zuspanneinrichtung 13 aufweist, wobei die Erzeugung der Reaktionskraft auf der der Betätigungseinrichtung abgewandten Seite der Bremse hier durch Verschieben der Bremsscheibe 3 erfolgt, wird die Verschleißnachstellung auf der Reaktionsseite wird jedoch nicht wie nach dem Stand der Technik durch Verschieben oder Verschwenken des Bremssattels oder Verschieben der Bremsscheibe realisiert sondern durch die in den Bremssattel auf der Reaktionsseite integrierte Nachstelleinrichtungen in Form der Spindelanordnungen nebst Elektroantrieb mit Elektromotor 47 an der Innenseite des reaktionsseitigen Bremssattelteils 1b und einem Getriebe 49 zwischen Elektromotor 47 und den Spindelanordnungen 37.

Abdeckplatten 51, 53 verschließen die Bremssatteilteile auf beiden Seiten der Bremsscheibe bis auf Öffnungen für die Druckstücke. Montageplatten 55, 57 erlauben eine modulartige Vormontage der Nachstelleinrichtungen beidseits der Bremsscheibe 3.

Es ist auch denkbar, die Erzeugung der Reaktionskraft durch eine elastische Verformung des Bremssattels, der Bremsscheibe und/oder eines separaten Elementes zu erreichen.

Die derart ausgebildeten Scheibenbremsen bieten neben einer deutlichen Gewichts und Kostenminderung durch Entfall des Bremsträgers und des Schiebeführungssystems eines Schiebe-Bremssattels und einer Erhöhung der Robustheit durch den Entfall dieser Bauelemente den zusätzlichen Vorteil, daß durch die zwangsweise Verschleißnachstellung ein ungleichmäßiger Verschleiß von innerem und äußerem Bremsbelag besser beeinflußbar ist.

Ein weiterer wesentlicher Vorteil dieser Varianten liegt darin, daß der hier von der Bremsscheibe 3 auszuführende Schiebe- oder Schwenkweg auf den zur Aufbringung der Reaktionskraft erforderlichen Krafthub begrenzt wird, der nur einen geringen Bruchteil des Verschleißhubes ausmacht; z.B. beträgt der notwendige Krafthub einer druckluftbetätigten Scheibenbremse für 22 Zoll-Räder ungefähr 4 mm, während der Verschleißhub ca. 25 mm groß ist.

Es ist auch eine Scheibenbremse mit Sattellager und verschieblicher Bremsscheibe denkbar, die jeweils um ca. den halben Arbeitshub verschiebbar sind. Auch diese Ausführungsform wird mit separaten Nachstelleinrichtungen auf beiden Seiten der Bremsscheibe versehen.

Anzumerken ist, daß sich die Erfindung für Scheibenbremsen, insbesondere Nutzfahrzeug-Scheibenbremsen, verschiedenster Art eignet. So ist die Idee von Nachstelleinrichtungen beidseits der Bremsscheibe sowohl bei elektromotorisch zuspannbaren Bremsen als auch bei pneumatisch betätigten Bremsen realisierbar. Ferner können die Nachstelleinrichtungen mit der/den Zuspanneinrichtungen ein- oder beidseitig der Bremsscheibe zum Antrieb gekoppelt werden und/oder unabhängig von den Zuspanneinrichtungen mit einem oder mehreren separaten elektromagnetischem Antrieb(en) versehen werden. Hier sind auch Mischformen denkbar, z.B. mit einer Nachstelleinrichtung mit Elektromotor auf der Reaktionsseite und mit einer mechanisch mit dem Drehhebel gekoppelten Nachstelleinrichtung auf der Seite der Zuspanneinrichtung.

Es ist ferner möglich, die Nachstell-Dreheinrichtungen beidseits der Bremsscheibe 3 mittels einer Rechner- und/oder Mikroprozessorsteuerung separat voneinander zu verstellen oder aber zum Erreichen eines gemeinsamen Verstellens eine mechanische Kopplung der Nachstelleinrichtungen beidseits der Bremsscheibe 3 vorzunehmen.

Die Zwangsrückstellung des jeweils schiebe - bzw. schwenkbaren Elementes Bremssattel oder Bremsscheibe ist durch elastische Rückstellelemente (z.B. Rückstellfeder(n) oder aktives Rückstellen durch das reaktionsseitige Nachstellermodul möglich.

Die Erfindung eignet sich ferner sowohl für Bremsen mit nur einem einzigen Nachstell-Antrieb auf jeder Seite der Bremsscheibe als auch für Ausführungsformen mit zwei oder sogar mehr Nachstell-Antrieben auf jeder Seite der Nachstellvorrichtung.

Wesentlich ist ferner der Aufbau des Bremssattels. Dadurch, dass das Bremssattelteil 1b, welches die Bremsscheibe rahmenartig einfasst, nur eine oder zwei Nachstellvorrichtung(en), nicht aber eine Zuspanneinrichtung aufweist, ist es möglich, insbesondere das weitere Bremssattelteil baukastensystemartig und modulartig zu variieren.

So wird in Fig. 2 zwar auf der Reaktionsseite ein hinsichtlich seines Aufbaus zur Fig. 1 identisches reaktionsseitiges Bremssattelteil 1b eingesetzt, das auch die Nachstellvorrichtung der Fig. 1 aufweist.

Dagegen weist das zuspannseitige Bremssattelsteil 1a eine vollständig andere Zuspanneinrichtung 13 als nach Fig. 1 auf.

Hier wirkt ein von der Kolbenstange eines Bremsszylinders beweglicher Dreh hebel 100 an der Außenseite des Bremssattels 1 auf eine den Bremssattel 1 durchsetzende Welle 101 mit einer hier nicht detailliert dargestellten Nachstellvorrichtung 102 ein.

Die Welle 101 trägt ein Zahnrad 103, das beidseitig mit Zähnen 104 kämmt, welche am Außenumfang von Gewindemuttern 105 angeordnet sind, in denen Gewindespindeln 106 verschraubt sind, welche zu zwei zueinander parallel und senkrecht zur Bremsscheibe 3 ausgerichteten Kugelgewindetrieben 107 gehören, wobei die Gewindemuttern 105 mit Lagern 108 am Bremssattellinneren gelagert sind.

Bei Bremsungen wird der Drehhebel 100 verschwenkt, was die Welle 101 und damit die Gewindemuttern 105 mitdreht, so dass die Gewindespindeln 106 axial in Richtung des zuspannseitigen Bremsbelages 7 vorgeschoben werden und diesen gegen die Bremsscheibe 3 legen.

Das Profil zwischen der Gewindemutter 105 und der Gewindespindel 106 ist jeweils als Sägezahnprofil ausgebildet, auf dem die Kugeln laufen, was in Druckrichtung eine hohe Belastbarkeit sicherstellt. Die Kugellaufbahnen sind damit ähnlich zu einem Schrägkugellager ausgebildet. Diese Bauform sichert eine erhöhte axiale Tragfähigkeit, es sind aber auch andere Profilforme denkbar.

Der Bremssattel kann wiederum als Festsattel oder auf eine der weiteren eingangs genannten Arten ausgelegt sein, so dass sich die auf der Reaktionsseite angeordnete Nachstelloption wiederum als ausgesprochen vorteilhaft erweist.

In Fig. 3 - 6 ist ergänzend die Bremssattelgeometrie erkennbar. Gut zu sehen ist beispielsweise in Fig. 5 der Rahmen 1d, den das Bremssattelteil 1b ausbildet. Das Bremsssattelteil 1b weist den Rahmen 1d auf, an den sich ein Abschnitt zur Aufnahme der reaktionsseitigen Nachstelleinrichtung anschließt, welcher die Ausnehmung 41 umfaßt, wobei allseits der Bremsscheibe 3 Streben des Bremssattelteiles 1b zur Ausbildung des Rahmens 1d einstückig miteinander verbunden sind. Diese Streben bilden auch die Aufnahmen bzw. Belagschächte für die beiden Bremsbeläge.

### Bezugszeichen

- Bremssattel: 1
- Bremssattelteile: 1a, 1b
- Rahmen: 1d
- Bolzen: 2
- Bremsscheibe: 3
- Bremsbeläge: 5, 7
- Bremsbelagträger: 5a, 7a
- Belagmaterial: 5b, 7b
- Bolzen: 9
- Achsflansch: 11
- Zuspanneinrichtung: 13
- Öffnung: 15
- Kolbenstange: 17
- Bremszylinder: 19
- Drehhebel: 21
- Kugelelemente: 23
- Kugelelemente: 25
- Spindelanordnungen: 27a,b
- Druckstücke: 29
- Bolzen: 31
- Hülse: 33
- Elektromotor: 35
- Spindelanordnungen: 37a, b
- Ausnehmung: 41
- Bolzen: 43
- Hülsen: 45
- Scheiben: 46
- Elektromotor: 47
- Getriebe: 49
- Abdeckplatten: 51, 53
- Montageplatten: 55, 57
- Drehhebel: 100
- Welle: 101
- Nachstellvorrichtung: 102
- Zahnrad: 103
- Verzahnung: 104
- Gewindemutter: 105
- Gewindespindel: 106
- Kugelgewindetreib: 107
- Lager: 108

## Patentansprüche

1. Scheibenbremse, insbesondere für Nutzfahrzeuge, mit
a) einem eine Bremsscheibe (3) übergreifenden Bremssattel (1),
b) einer im Bremssattel (1) angeordneten Zuspanneinrichtung (13) zum Zuspannen der Bremse;
c) sowie einem im Bremssattel (1) angeordneten Nachstellsystem zum Ausgleich von Bremsbelag- und/oder Scheibenverschleiß durch Verstellen des Abstandes zwischen Bremsbelag (7) und Bremsscheibe (3),
d) wobei das Nachstellsystem wenigstens eine Nachstelleinrichtung aufweist,
e) wobei der Bremssattel (1) zweiteilig aufgebaut ist und ein zuspannseitiges und ein reaktionsseitiges Bremssattelteil (1a, 1b) aufweist,
**dadurch gekennzeichnet dass** das reaktionsseitige Bremssattelteil (1b) derart ausgestaltet ist, dass es die Bremsscheibe (3) rahmenartig in ihrem oberen Umfangsbereich einfasst, und
f) wobei das Nachstellsystem wenigstens eine oder mehrere der Nachstelleinrichtungen auch auf der reaktionsseitigen Seite der Bremsscheibe, vorzugsweise auf jeder Seite der Bremsscheibe (3) aufweist.

2. Scheibenbremse nach Anspruch 1, **dadurch gekennzeichnet, daß** das reaktionsseitige Bremssattelteil (1b) die beiden Bremsbeläge (5, 7) beidseits der Bremsscheibe (3) aufnimmt.

3. Scheibenbremse nach Anspruch 1 oder 2, **dadurch gekennzeichnet, daß** das reaktionsseitige Bremssattelteil die reaktionsseitigen Nachstelleinrichtungen (37a, b, 47, 49) in einer Ausnehmung (41) aufnimmt.

4. Scheibenbremse nach einem der vorstehenden Ansprüche, **dadurch gekennzeichnet, daß** das reaktionsseitige Bremssattelteil derart ausgestaltet ist, dass es an Ansätzen mit einem oder mehreren Bolzen (9) direkt am Achsflansch (11) oder an einen Bremsträger befestigbar ist.

5. Scheibenbremse nach einem der vorstehenden Ansprüche, **dadurch gekennzeichnet, daß** die Erzeugung der Reaktionskraft auf der von der Zuspannseite abgewandten Seite der Bremse durch
- Verschieben des Bremssattels (1) und/oder
- Verschwenken des Bremssattels (1) und/oder
- Verschieben der Bremsscheibe (3)
erfolgt, wobei durch die Verschiebe- und/oder Verschwenkbewegung im wesentlichen lediglich der Weg des halben oder ganzen Krafthubes überbrückbar ist.

6. Scheibenbremse nach einem der Ansprüche 1-4, **dadurch gekennzeichnet, daß** die Erzeugung der Reaktionskraft auf der von der Zuspannseite abgewandten Seite der Bremse durch ein elastisches Verformen des Bremssattels und/oder der Bremsscheibe und/oder eines Elementes zwischen Bremssattel (1) und Achsflansch (11) erfolgt.

7. Scheibenbremse nach einem der Ansprüche 1-5, **dadurch gekennzeichnet, daß** die Bremsscheibe (3) als Schiebescheibe ausgebildet ist, welche auf einer Bremsscheibennabe derart verschieblich geführt ist, daß durch das Verschieben ein im wesentlichen auf den halben oder ganzen Krafthub begrenzter Schiebeweg realisierbar ist.

8. Scheibenbremse nach einem der Ansprüche 1-5, **dadurch gekennzeichnet, daß** der Bremssattel (1) als Schiebesattel ausgebildet ist, der
- ein Schiebe-Sattellager aufweist,
- welches direkt am Achsflansch (11) befestigbar ist,
- welches derart bemessen ist, daß ein auf den halben oder ganzen Krafthub begrenzter Schiebeweg überbrückbar ist.

9. Scheibenbremse nach einem der Ansprüche 1-5, **dadurch gekennzeichnet, daß** der Bremssattel (1) als Schwenksattel ausgebildet ist, der
- ein Schwenk-Sattellager aufweist,
- welches vorzugsweise direkt am Achsflansch (11) befestigbar ist,
- und mit dem ein Schwenkwinkel überbrückbar ist, welcher den Bremssattel relativ zur Bremsscheibe im wesentlichen um den Betrag des halben oder ganzen Krafthubes versetzt.

10. Scheibenbremse nach einem der vorstehenden Ansprüche, **dadurch gekennzeichnet, daß** die Zuspanneinrichtung folgendes aufweist: einen - vorzugsweise exzentrisch - am Bremssattel (1) gelagerten Drehhebel (21), welcher sich über Kugelelemente (23) am Inneren des zuspannseitigen Bremssattelteils (1a) abstützt, wobei der Drehhebel (21) ferner an seiner vom Bremssattel (1) abgewandten Seite weitere Kugelelemente (25) aufweist, die zwei parallel zueinander angeordnete Spindelanordnungen (27a,b) umfassen, an deren bremsscheibenzugewandten Enden jeweils Druckstücke (29) angeordnet sind, welche auf den zuspannseitigen Bremsbelag (7) einwirken.

11. Scheibenbremse nach Anspruch 10 und eventuell einem weiteren der vorstehenden Ansprüche, **dadurch gekennzeichnet, daß** die Spindelanordnungen (27a, b, 37a,b) ein- und/oder beidseits der Bremsscheibe als Nachstelleinrichtungen in ihrer Länge senkrecht zur Bremsscheibe (3) veränderlich sind und jeweils aus einem Bolzen (31, 43) und einer darauf verschraubten Hülse (35, 45) bestehen.

12. Scheibenbremse nach einem der vorstehenden Ansprüche, **dadurch gekennzeichnet, daß** Nachstellsystem ferner ein- oder beidseits der Bremsscheibe einen Nachstellerantrieb aufweist, welcher als Elektromotor ausgebildet ist oder als mechanische Kopplung zur Zuspanneinrichtung.

13. Scheibenbremse nach einem der vorstehenden Ansprüche, **dadurch gekennzeichnet, daß** Nachsteller-Drehantriebe beidseits der Bremsscheibe durch eine Synchronisationseinrichtung miteinander gekoppelt sind.

14. Scheibenbremse nach Anspruch 13, **dadurch gekennzeichnet, daß** die Synchronisationseinrichtung als Koppelmechanik oder als elektronisches Kopplungssystem ausgebildet ist.

15. Scheibenbremse nach einem der vorstehenden Ansprüche, **dadurch gekennzeichnet, daß** das Nachstellsystem ein- oder beidseits der Bremsscheibe als vormontierbares Nachstellermodul (50, 100)ausgebildet ist.

16. Scheibenbremse nach einem der vorstehenden Ansprüche, **dadurch gekennzeichnet, daß**
die Zuspanneinrichtung einen oder mehrere Kugelgewindetrieb(e) (107) aufweist.

17. Scheibenbremse nach Anspruch 16, **dadurch gekennzeichnet, dass** ein Drehhebel (100) an der Außenseite des Bremssattels (1) auf eine den Bremssattel (1) durchsetzende Welle (101), insbesondere mit einer integrierten Nachstellvorrichtung (102) einwirkt.

18. Scheibenbremse nach Anspruch 17, **dadurch gekennzeichnet, dass** die Welle (101) ein Zahnrad (103) trägt, das beidseitig mit Zähnen (104) kämmt, welche am Außenumfang von Gewindemuttern (105) angeordnet sind, in denen Gewindespindeln (106) verschraubt sind, welche zu zwei zueinander parallel und senkrecht zur Bremsscheibe (3) ausgerichteten Kugelgewindetrieben (107) gehören, wobei die Gewindemuttern mit Lagern (108) am Bremssattelinneren gelagert sind.

19. Scheibenbremse nach Anspruch 18, **dadurch gekennzeichnet, dass** bei den Kugelgewindetrieben der Zuspanneinrichtung das Profil zwischen der Gewindemutter (105) und der Gewindespindel (106) jeweils als Sägezahnprofil ausgebildet ist, auf dem Kugeln laufen.

## Claims

1. Disc brake, in particular for utility vehicles, with
a) a brake caliper (1) straddling a brake disc (3),
b) an application mechanism (13) disposed in the brake caliper (1) for applying the brake,
c) and an adjustment system disposed in the brake caliper (1) for compensating brake pad and/or disc wear by adjusting the distance between the brake pad (7) and brake disc (3),
d) which adjustment system has at least one adjusting mechanism ,
e) the brake caliper (1) being of a two-part construction and having an application-side and a reaction-side brake caliper part (1a, 1b), **characterised in that** the reaction-side brake caliper part (1b) is designed to frame the top peripheral region of the brake disc (3) and
f) the adjustment system has at least one or more adjusting mechanisms on the reaction-side side of the brake disc, preferably on each side of the brake disc (3).

2. Disc brake as claimed in claim 1, **characterised in that** the reaction-side brake caliper part (1b) accommodates the two brake pads (5, 7) on either side of the brake disc (3).

3. Disc brake as claimed in claim 1 or 2, **characterised in that** the reaction-side brake caliper part accommodates the reaction-side adjusting mechanisms 37a, b, 47, 49 in a recess (41).

4. Disc brake as claimed in one of the preceding claims, **characterised in that** the reaction-side brake caliper part is designed so that it can be secured on extensions with one or more bolts (9) directly on the axle flange (11) or on a brake anchor plate.

5. Disc brake as claimed in one of the preceding claims, **characterised in that** the reaction force is generated on the side of the brake remote from the application side by
- displacing the brake caliper (1) and/or
- pivoting the brake caliper (1) and/or
- displacing the brake disc (3),
and essentially only the path of half of the power stroke or the full power stroke can be covered by the displacement and/or pivoting movement.

6. Disc brake as claimed in one of claims 1 - 4, **characterised in that** the reaction force is generated on the side of the brake remote from the application side by an elastic deformation of the brake caliper part and/or the brake disc and/or an element between the brake caliper (1) and axle flange (11).

7. Disc brake as claimed in one of claims 1 - 5, **characterised in that** the disc brake (3) is provided in the form of a sliding disc which is displaceably guided on a brake disc hub so that a displacement path can be achieved which is essentially limited to the half or full power stroke by the displacement.

8. Brake disc as claimed in one of claims 1 - 5, **characterised in that** the brake caliper (1) is provided in the form of a sliding caliper which
- has a sliding caliper bearing,
- which can be secured directly on the axle flange (11),
- which is dimensioned so that a displacement path which can be covered is limited to the half or full power stroke.

9. Disc brake as claimed in one of claims 1 - 5, **characterised in that** the brake caliper (1) is provided in the form of a pivoting caliper which
- has a pivoting caliper bearing,
- which can preferably be secured directly on the axle flange (11),
- and by means of which a pivoting angle can be covered which offsets the brake caliper from the brake disc by an amount essentially corresponding to the half or full power stroke.

10. Disc brake as claimed in one of the preceding claims, **characterised in that** the application mechanism comprises the following: a rotary lever (21) mounted - preferably eccentrically - on the brake caliper (1) supported by means of ball elements (23) inside the application-side brake caliper part (1a), which rotary lever (21) also has other ball elements (25) on its side remote from the brake caliper (1) which incorporate two mutually parallel spindle arrangements (27a, b), the ends of which facing the brake disc each have pressure pieces (29) which act on the application-side brake pad (7).

11. Disc brake as claimed in claim 10 and optionally one of the other preceding claims, **characterised in that** the length of the spindle arrangements (27a, b, 37a, b) acting as adjusting mechanisms on one and/or both side(s)of the brake disc is variable perpendicular to the brake disc (3) and each comprises a bolt (31, 43) and a sleeve (35, 45) screwed thereon.

12. Disc brake as claimed in one of the preceding claims, **characterised in that** the adjustment system additionally has an adjusting drive on one or both sides of the brake disc, which is provided in the form of an electric motor or as a mechanical coupling to the application mechanism.

13. Disc brake as claimed in one of the preceding claims, **characterised in that** the adjuster-rotary drives on either side of the brake disc are coupled with one another by means of a synchronisation mechanism.

14. Disc brake as claimed in claim 13, **characterised in that** the synchronisation mechanism is provided in the form of a coupling mechanism or an electronic coupling system.

15. Disc brake as claimed in one of the preceding claims, **characterised in that** the adjustment system is provided in the form an adjustment module (50, 100) which can be pre-assembled on one or both sides of the brake disc.

16. Disc brake as claimed in one of the preceding claims, **characterised in that** the application mechanism has one or more ball and screw drive(s) (107).

17. Disc brake as claimed in claim 16, **characterised in that** a rotary lever (100) on the outside of the brake caliper (1) acts on a shaft (101) extending through the brake caliper (1), in particular with an integrated adjusting mechanism (102).

18. Disc brake as claimed in claim 17, **characterised in that** the shaft (101) bears a gear wheel (103) which meshes at both sides with teeth (104) disposed on the outer periphery of threaded nuts (105), into which are screwed threaded spindles (106) belonging to two mutually parallel ball and screw drives (107) oriented perpendicular to the brake disc (3), which threaded nuts are mounted by means of bearings (108) on the brake caliper inside.

19. Disc brake as claimed in claim 18, **characterised in that**, on the ball and screw drives of the application mechanism, the profile between the threaded nut (105) and the threaded spindle (106) is respectively a saw-tooth profile on which the balls run.

## Revendications

1. Frein à disque, en particulier pour véhicules utilitaires, comprenant
a) un étrier (1) de frein engageant en recouvrement un disque (3) de frein,
b) un dispositif (13) de serrage pour serrer le frein, disposé dans l'étrier (1) de frein ;
c) ainsi qu'un système de rattrapage de jeu, disposé dans l'étrier (1) de frein, pour compenser l'usure de la garniture de frein et/ou du disque de frein en réglant la distance entre la garniture (7) de frein et le disque (3) de frein,
d) dans lequel le système de rattrapage de jeu comprend au moins un dispositif de rattrapage de jeu,
e) dans lequel l'étrier (1) de frein est réalisé en deux parties et comporte une partie (la) d'étrier de frein du côté de serrage et une partie (1b) d'étrier de frein du côté de réaction,
**caractérisé en ce que**
la partie (1b) d'étrier de frein du côté de réaction est conçue de telle sorte qu'elle entoure le disque (3) de frein à la manière d'un cadre dans sa région supérieure de pourtour, et
f) le système de rattrapage de jeu comprend au moins un ou plusieurs des dispositifs de rattrapage de jeu également sur le côté de réaction du disque de frein, de préférence sur chaque côté du disque (3) de frein.

2. Frein à disque suivant la revendication 1, **caractérisé en ce que** la partie (1b) d'étrier de frein du côté de réaction reçoit les deux garnitures (5, 7) de frein situées des deux côtés du disque (3) de frein.

3. Frein à disque suivant la revendication 1 ou 2, **caractérisé en ce que** la partie d'étrier de frein du côté de réaction reçoit les dispositifs de rattrapage de jeu du côté de réaction (37a, b, 47, 49) dans un évidement (41).

4. Frein à disque suivant l'une des revendications précédentes, **caractérisé en ce que** la partie d'étrier de frein du côté de réaction est conçue de telle sorte que, par des prolongements et au moyen d'un ou plusieurs boulons (9), elle peut être fixée directement sur le flasque (11) d'essieu ou sur un support de frein.

5. Frein à disque suivant l'une des revendications précédentes, **caractérisé en ce que** la production de la force de réaction sur le côté du frein qui est opposé au côté de serrage s'effectue par
- translation de l'étrier (1) de frein et/ou
- pivotement de l'étrier (1) de frein et/ou
- translation du disque (3) de frein,
le mouvement de translation et/ou de pivotement permettant pour l'essentiel de couvrir uniquement une distance égale à la moitié ou à la totalité de la course de travail.

6. Frein à disque suivant l'une des revendications 1 à 4, **caractérisé en ce que** la production de la force de réaction sur le côté du frein qui est opposé au côté de serrage s'effectue par une déformation élastique de l'étrier de frein et/ou du disque de frein et/ou d'un élément situé entre l'étrier (1) de frein et le flasque (11) d'essieu.

7. Frein à disque suivant l'une des revendications 1 à 5, **caractérisé en ce que** le disque (3) de frein est réalisé sous forme de disque coulissant, qui est guidé en translation sur un moyeu de disque de frein de telle sorte que la translation permet de couvrir une distance de coulissement limitée pour l'essentiel à la moitié ou à la totalité de la course de travail.

8. Frein à disque suivant l'une des revendications 1 à 5, **caractérisé en ce que** l'étrier (1) de frein est réalisé sous forme d'étrier coulissant, qui
- comporte un palier d'étrier coulissant,
- lequel peut être fixé directement sur le flasque (11) d'essieu,
- et lequel est dimensionné de telle sorte qu'une distance de coulissement limitée à la moitié ou à la totalité de la course de travail peut être couverte.

9. Frein à disque suivant l'une des revendications 1 à 5, **caractérisé en ce que** l'étrier (1) de frein est réalisé sous forme d'étrier pivotant, qui
- comporte un palier d'étrier pivotant,
- lequel peut être de préférence fixé directement sur le flasque (11) d'essieu,
- et lequel permet de couvrir un angle de pivotement qui déplace l'étrier de frein par rapport au disque de frein sensiblement du montant de la moitié ou de la totalité de la course de travail.

10. Frein à disque suivant l'une des revendications précédentes, **caractérisé en ce que** le dispositif de serrage du frein comporte ce qui suit : un levier (21) tournant monté
- de préférence excentriquement - sur l'étrier (1) de frein, levier qui s'appuie par l'intermédiaire d'éléments (23) sphériques sur l'intérieur de la partie (la) d'étrier de frein du côté de serrage, sachant que le levier (21) tournant comportant en outre sur son côté opposé à l'étrier (1) de frein d'autres éléments (25) sphériques qui comprennent deux ensembles de broche (27a, b) disposés parallèlement entre eux, aux extrémités tournées vers le disque de frein desquels sont respectivement disposées des pièces (29) de pression qui agissent sur la garniture (7) de frein du côté de serrage.

11. Frein à disque suivant la revendication 10 et éventuellement une autre des revendications précédentes, **caractérisé en ce que** les ensembles de broches (27a, b, 37a, b) d'un côté et/ou des deux côtés du disque de frein sont, en tant que dispositifs de rattrapage de jeu, de longueur variable perpendiculairement au disque (3) de frein, et sont constitués chacun d'un boulon (31, 43) et d'une douille (35, 45) vissée sur ce boulon.

12. Frein à disque suivant l'une des revendications précédentes, **caractérisé en ce que** le système de rattrapage de jeu comporte en outre, d'un côté ou des deux côtés du disque de frein, un entraînement de rattrapage de jeu qui est réalisé sous forme de moteur électrique ou de couplage mécanique vers le dispositif de serrage du frein.

13. Frein à disque suivant l'une des revendications précédentes, **caractérisé en ce que** les entraînements rotatifs de rattrapage de jeu situés des deux côtés du disque de frein sont couplés entre eux par un dispositif de synchronisation.

14. Frein à disque suivant la revendication 13, **caractérisé en ce que** le dispositif de synchronisation est réalisé sous forme de mécanisme de couplage ou de système de couplage électronique.

15. Frein à disque suivant l'une des revendications précédentes, **caractérisé en ce que** le système de rattrapage de jeu d'un côté ou des deux côtés du disque de frein est réalisé sous forme de module (50, 100) de rattrapage de jeu pouvant être pré-assemblé.

16. Frein à disque suivant l'une des revendications précédentes, **caractérisé en ce que** le dispositif de serrage du frein comporte une ou plusieurs vis (107) d'entraînement à billes.

17. Frein à disque suivant la revendication 16, **caractérisé en ce qu'**un levier (100) tournant agit, sur le côté extérieur de l'étrier (1) de frein, sur un arbre (101) traversant l'étrier (1) de frein et notamment doté d'un dispositif (102) intégré d'ajustement.

18. Frein à disque suivant la revendication 17, **caractérisé en ce que** l'arbre (101) porte une roue (103) dentée qui engrène des deux côtés avec des dents (104) qui sont disposées sur le pourtour extérieur d'écrous (105) filetés dans lesquels sont vissées des broches (106) filetées qui font partie de deux vis (107) d'entraînement à billes orientées parallèlement entre elles et perpendiculairement au disque (3) de frein, sachant que les écrous filetés sont montés par des paliers (108) sur l'intérieur de l'étrier de frein.

19. Frein à disque suivant la revendication 18, **caractérisé en ce que**, pour les vis d'entraînement à billes du dispositif de serrage du frein, le profil entre l'écrou (105) fileté et la broche (106) filetée est chaque fois réalisé sous forme de profil en dents de scie sur lequel roulent des billes.
